(19) 
**Europäisches Patentamt**
**European Patent Office**
**Office européen des brevets**

(11) **EP 4 668 952 A1**

(12) **EUROPEAN PATENT APPLICATION**
published in accordance with Art. 153(4) EPC

(43) Date of publication:
**24.12.2025 Bulletin 2025/52**

(21) Application number: **24756053.5**

(22) Date of filing: **04.02.2024**

(51) International Patent Classification (IPC):
*H04W 72/0453* *(2023.01)*

(52) Cooperative Patent Classification (CPC):
**H04W 72/0453; H04W 72/12**

(86) International application number:
**PCT/CN2024/075735**

(87) International publication number:
**WO 2024/169679 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 CN 202310133069**

(71) Applicant: **Datang Mobile Communications Equipment Co., Ltd.**
**Beijing 100085 (CN)**

(72) Inventors:
- **ZHU, Min**
  **Beijing 100085 (CN)**
- **WANG, Junwei**
  **Beijing 100085 (CN)**

(74) Representative: **Studio Torta S.p.A.**
**Via Viotti, 9**
**10121 Torino (IT)**

(54) **INFORMATION PROCESSING METHOD AND APPARATUS, TERMINAL AND NETWORK DEVICE**

(57)     This disclosure provides an information processing method and apparatus, terminal and network device, and pertains to the field of communication technology. The method includes: a terminal receives downlink control information (DCI) from a network device, wherein the DCI is used for scheduling at least one carrier, and includes at least one indicator field, the indicator field indicating an index value; the terminal determines a bandwidth part (BWP) configuration corresponding to a first index value indicated by a first indicator field according to a mapping relationship between BWP configurations corresponding to the at least one carrier and index values, the first indicator field being one of the at least one indicator field; the terminal determines a parameter of an active BWP on a first scheduled carrier according to the BWP configuration corresponding to the first index value, the first scheduled carrier being at least one of the at least one carrier.

A terminal receives DCI sent by a network device, wherein the DCI is used for scheduling at least one carrier, and the DCI includes at least one indicator field, and the indicator field is used to indicate an index value ⟩ 21

The terminal determines a BWP configuration corresponding to a first index value indicated by a first indicator field according to a mapping relationship between BWP configurations corresponding to the at least one carrier and index values, wherein the first indicator field is one of the at least one indicator field ⟩ 22

The terminal determines, according to the BWP configuration corresponding to the first index value, a parameter of an active BWP on a first scheduled carrier, wherein the first scheduled carrier is at least one of the at least one carrier ⟩ 23

Fig. 2

# EP 4 668 952 A1

**Description**

**CROSS-REFERENCE TO RELATED APPLICATION**

This disclosure claims a priority to the Chinese patent application No. 202310133069.0 filed with the CNIPA on February 17, 2023, and titled "information processing method and apparatus, terminal and network device", disclosure of which is incorporated herein by reference in its entirety.

**TECHNICAL FIELD**

The present disclosure relates to the field of communication technology, and in particular to an information processing method and apparatus, a terminal and a network device.

**BACKGROUND**

In New Radio (NR) technology, a downlink control information (DCI) is used for scheduling a physical downlink shared channel (PDSCH) or a physical uplink shared channel (PUSCH) on one carrier. With the emergence of more dispersed spectrum and large bandwidth spectrum resources, the demand for scheduling multiple carriers at the same time has also increased. In order to reduce the control signaling overhead, the technical solution of using one DCI to schedule PDSCH or PUSCH on multiple carriers is considered. However, there is currently no specific solution to the problem of how the DCI for scheduling multiple carriers indicates a parameter of the active BWP of one or more carriers.

**SUMMARY**

The present disclosure provides an information processing method and apparatus, terminal and network device to solve the problem that there is no specific solution to how DCI for multi-carrier scheduling indicates a parameter of an active BWP of one or more carriers.

An embodiment of the present disclosure provides an information processing method, including:

receiving, by a terminal, downlink control information (DCI) sent by a network device, wherein the DCI is used for scheduling at least one carrier, and the DCI includes at least one indicator field, and the indicator field is used to indicate an index value;

determining, by the terminal, according to a mapping relationship between the BWP configuration corresponding to the at least one carrier and the index value, a BWP configuration corresponding to the first index value indicated by the first indicator field, wherein the first indicator field is one of the at least one indicator field;

determining, by the terminal, according to the BWP configuration corresponding to the first index value, a parameter of an active BWP on a first scheduled carrier, wherein the first scheduled carrier is at least one of the at least one carrier.

Optionally, the information processing method further includes:

receiving, by the terminal, a higher layer signaling sent by the network device, wherein the higher layer signaling includes the mapping relationship.

Optionally, a number of bits of the indicator field is determined by a number of index values in the mapping relationship.

Optionally, the number of bits of the indicator field is: $\lceil log_2 L \rceil$ , where L is the number of index values.

Optionally, the mapping relationship includes one of the following:

a first mapping relationship between a first BWP configuration and index values; wherein the at least one carrier corresponds to one first mapping relationship, and the first BWP configuration includes BWP configurations corresponding to all BWPs respectively on each carrier of the at least one carrier; or, the first BWP configuration includes BWP configurations corresponding to all BWPs respectively on each carrier of a carrier set, and the carrier set includes all carriers that the DCI is used for scheduling;

a second mapping relationship between a second BWP configuration and index values; wherein each BWP on each carrier of the at least one carrier corresponds to one second mapping relationship, and the second BWP configuration is a BWP configuration corresponding to one BWP;

a third mapping relationship between a third BWP configuration and index values, wherein each carrier of the at least one carrier corresponds to one third mapping relationship, and the third BWP configuration includes BWP configurations corresponding to all BWPs respectively on one carrier.

Optionally, the number of bits of the indicator field being determined by the number of the index values in the mapping relationship includes:

in a case that the mapping relationship is the first mapping relationship, the number of bits of the indicator field is determined by the number of the index values in the first mapping relationship;
or,
in a case that the mapping relationship is the second mapping relationship or the third mapping relationship, the number of bits of the indicator field is determined by a maximum number of the index values in the second mapping relationship or the third mapping relationship.

Optionally, the number of bits of the indicator field being determined by the maximum number of the index values in the second mapping relationship includes:

the number of bits of the indicator field is determined by the maximum number of the index values in the second mapping relationships corresponding to active BWPs;
or,
the number of bits of the indicator field is determined by the maximum number of the index values in the second mapping relationships corresponding to all BWPs on the at least one carrier.

Optionally, the indicator field includes at least one of the following:

a rate matching indicator field;
a zero power channel state information reference signal (ZP CSI-RS) indicator field;
a transmission configuration indication (TCI) indicator field;
a sounding reference signal (SRS) request indicator field; or
an SRS offset indicator field.

Optionally, after the receiving, by the terminal, the DCI sent by the network device, the method further includes: determining, by the terminal, the first index value corresponding to the first scheduled carrier according to a numerical value indicated by N bits in the indicator field, wherein $N \leq M$, N and M are positive integers, and M is the number of bits of the indicator field.

Optionally, the determining, by the terminal, the first index value corresponding to the first scheduled carrier according to the numerical value indicated by N bits in the indicator field includes:

in a case that the numerical value indicated by the N bits does not fall within an index value range corresponding to the first scheduled carrier, ignoring, by the terminal, the indicator field; or, determining, by the terminal, the first index value according to the numerical value indicated by the N bits;
or,
in a case that the numerical value indicated by the N bits falls within the index value range corresponding to the first scheduled carrier, determining the numerical value indicated by the N bits as the first index value.

An embodiment of the present disclosure provides an information processing method, including:

determining, by a network device, at least one indicator field according to a mapping relationship between BWP configurations corresponding to the at least one carrier and index values, wherein the indicator field is used to indicate an index value in the mapping relationship; and
sending, by the network device, a DCI to the terminal, wherein the DCI is used for scheduling the at least one carrier, and the DCI includes the at least one indicator field.

Optionally, the information processing method further includes:
sending, by the network device, a higher layer signaling to the terminal, wherein the higher layer signaling includes the mapping relationship.

An embodiment of the present disclosure provides an information processing apparatus, including a memory, a transceiver, and a processor;
wherein the memory is configured to store a computer program; the transceiver is configured to send and receive data under the control of the processor; the processor is configured to read the computer program in the memory and perform the following steps:

receiving downlink control information (DCI) sent by a network device, wherein the DCI is used for scheduling at least one carrier, and the DCI includes at least one indicator field, and the indicator field is used to indicate an index value; determining, according to a mapping relationship between bandwidth part (BWP) configurations corresponding to the at least one carrier and index values, a BWP configuration corresponding to a first index value indicated by a first indicator field, wherein the first indicator field is one of the at least one indicator field; determining, according to the BWP configuration corresponding to the first index value, a parameter of an active BWP on a first scheduled carrier, wherein the first scheduled carrier is at least one of the at least one carrier.

Optionally, the processor is configured to read the computer program in the memory and perform the following step:
receiving a higher layer signaling sent by the network device, wherein the higher layer signaling includes the mapping relationship.

Optionally, a number of bits of the indicator field is determined by a number of the index values in the mapping relationship.

Optionally, the number of bits of the indicator field is: $\lceil log_2 L \rceil$, where L is the number of index values.

Optionally, the mapping relationship includes one of the following:

a first mapping relationship between a first BWP configuration and index values; wherein the at least one carrier corresponds to one first mapping relationship, and the first BWP configuration includes BWP configurations corresponding to all BWPs respectively on each carrier of the at least one carrier; or, the first BWP configuration includes BWP configurations corresponding to all BWPs respectively on each carrier of a carrier set, and the carrier set includes all carriers that the DCI is used for scheduling;
a second mapping relationship between a second BWP configuration and index values; wherein each BWP on each carrier of the at least one carrier corresponds to one second mapping relationship, and the second BWP configuration is a BWP configuration corresponding to one BWP;
a third mapping relationship between a third BWP configuration and index values, wherein each carrier of the at least one carrier corresponds to one third mapping relationship, and the third BWP configuration includes BWP configurations corresponding to all BWPs respectively on one carrier.

Optionally, the number of bits of the indicator field being determined by the number of the index values in the mapping relationship includes:

in a case that the mapping relationship is the first mapping relationship, the number of bits of the indicator field is determined by the number of the index values in the first mapping relationship;
or,
in a case that the mapping relationship is the second mapping relationship or the third mapping relationship, the number of bits of the indicator field is determined by a maximum number of the index values in the second mapping relationship or the third mapping relationship.

Optionally, the number of bits of the indicator field being determined by the maximum number of the index values in the second mapping relationship includes:

the number of bits of the indicator field is determined by the maximum number of the index values in the second mapping relationships corresponding to active BWPs;
or,
the number of bits of the indicator field is determined by the maximum number of the index values in the second mapping relationships corresponding to all BWPs on the at least one carrier.

Optionally, the indicator field includes at least one of the following:

a rate matching indicator field;
a ZP CSI-RS indicator field;
a TCI indicator field;
an SRS request indicator field; or
an SRS offset indicator field.

Optionally, the processor is configured to read the computer program in the memory and perform the following step:
determining the first index value corresponding to the first scheduled carrier according to a numerical value indicated by N bits in the indicator field, wherein N≤M, N and M are positive integers, and M is the number of bits of the indicator field.

Optionally, the processor is configured to read the computer program in the memory and perform the following steps:

in a case that the numerical value indicated by the N bits does not fall within an index value range corresponding to the first scheduled carrier, ignoring the indicator field, or determining the first index value according to the numerical value indicated by the N bits;
or,
in a case that the numerical value indicated by the N bits falls within the index value range corresponding to the first scheduled carrier, determining the numerical value indicated by the N bits as the first index value.

An embodiment of the present disclosure provides a terminal, including:

a first receiving unit, configured to receive downlink control information (DCI) sent by a network device, wherein the DCI is used for scheduling at least one carrier, and the DCI includes at least one indicator field, and the indicator field is used to indicate an index value;
a first processing unit, configured to determine, according to a mapping relationship between the BWP configuration corresponding to the at least one carrier and the index value, a BWP configuration corresponding to the first index value indicated by the first indicator field, wherein the first indicator field is one of the at least one indicator field;
a second processing unit, configured to determine, according to the BWP configuration corresponding to the first index value, a parameter of an active BWP on a first scheduled carrier, wherein the first scheduled carrier is at least one of the at least one carrier.

An embodiment of the present disclosure provides an information processing apparatus, including a memory, a transceiver, and a processor;
wherein the memory is configured to store a computer program; the transceiver is configured to send and receive data under the control of the processor; the processor is configured to read the computer program in the memory and perform the following steps:

determining at least one indicator field according to a mapping relationship between BWP configurations corresponding to the at least one carrier and index values, wherein the indicator field is used to indicate an index value in the mapping relationship;
sending DCI to the terminal, wherein the DCI is used for scheduling the at least one carrier, and the DCI includes the at least one indicator field.

Optionally, the processor is configured to read the computer program in the memory and perform the following step:
sending a higher layer signaling to the terminal, wherein the higher layer signaling includes the mapping relationship.

An embodiment of the present disclosure provides a network device, including:

a processing unit, configured to determine at least one indicator field according to a mapping relationship between BWP configurations corresponding to the at least one carrier and index values; wherein the indicator field is used to indicate an index value in the mapping relationship;
a first sending unit, configured to send DCI to the terminal; wherein the DCI is used for scheduling the at least one carrier, and the DCI includes the at least one indicator field.

An embodiment of the present disclosure provides a processor-readable storage medium, wherein the processor-readable storage medium stores a computer program, the computer program is configured to cause a processor to perform the steps of the information processing method on the terminal side as described above, or the computer program is configured to cause the processor to perform the steps of the information processing method on the network device side as described above.

The technical solution of this disclosure has the following beneficial effects.

In embodiments of the present disclosure, a terminal receives a DCI sent by a network device that is configured to schedule at least one carrier, and the DCI includes at least one indicator field, so that the terminal can determine a BWP configuration corresponding to a first index value indicated by a first indicator field according to the first index value indicated by the first indicator field in the at least one indicator field, and a mapping relationship between BWP configurations corresponding to the at least one carrier and index values, and the terminal can determine a parameter of an active BWP on the first scheduled carrier according to the BWP configuration corresponding to the first index value, thereby realizing that the DCI for scheduling one or more carriers indicates a parameter of an active BWP of one or more scheduled carriers.

## BRIEF DESCRIPTION OF THE DRAWINGS

Fig. 1 is a schematic diagram showing multi-carrier scheduling according to an embodiment of the present disclosure;
Fig. 2 is a flow chart showing an information processing method at a terminal side according to an embodiment of the present disclosure;
Fig. 3 is a flowchart showing an information processing method at a network device side according to an embodiment of the present disclosure;
Fig. 4 is a block diagram of an information processing apparatus on a terminal side according to an embodiment of the present disclosure;
Fig. 5 is a block diagram of a terminal according to an embodiment of the present disclosure;
Fig. 6 is a block diagram showing an information processing apparatus on a network device side according to an embodiment of the present disclosure;
Fig. 7 is a block diagram of a network device according to an embodiment of the present disclosure.

## DETAILED DESCRIPTION

In order to make the technical problems, technical solutions and advantages to be solved by the present disclosure clearer, the following will be described in detail with reference to the accompanying drawings and specific embodiments. In the following description, specific details such as specific configurations and components are provided only to help fully understand the embodiments of the present disclosure. Therefore, it should be clear to those skilled in the art that various changes and modifications can be made to the embodiments described herein without departing from the scope and spirit of the present disclosure. In addition, for clarity and brevity, the description of known functions and structures is omitted.

Expression "one embodiment" or "an embodiment" throughout the specification mean that specific features, structures, or characteristics associated with the embodiment are included in at least one embodiment of the present disclosure. Therefore, the references to "in one embodiment" or "in an embodiment" appearing throughout the specification do not necessarily refer to the same embodiment. In addition, these specific features, structures, or characteristics may be combined in any suitable manner in one or more embodiments.

In various embodiments of the present disclosure, it should be understood that the sequence numbers of the following processes do not imply the order of execution, and the order of execution of each process should be determined by its function and internal logic, and should not constitute any limitation on the implementation process of the embodiments of the present disclosure.

Additionally, the terms "system" and "network" are often used interchangeably herein.

The technical solution provided by the embodiments of the present disclosure can be applied to a variety of systems, especially the fifth generation mobile communication technology (5G) system. For example, the applicable system can be a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, a LTE time division duplex (TDD) system, an advanced long term evolution (LTE-A) system, a universal mobile telecommunication system (UMTS), a worldwide interoperability for microwave access (WiMAX) system, a 5G new radio (NR) system, etc. All these various systems include a terminal device and a network device. The system may also include a core network part, such as the Evolved Packet System (EPS), 5G System (5GS).

A network device and a terminal device can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional MIMO antennas (2D-MIMO), three-dimensional MIMO antennas (3D-MIMO), full-dimensional MIMO antennas (FD-MIMO), or massive MIMO antennas (massive-MIMO). It can also be diversity transmission, precoded transmission, or beamforming transmission.

In embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects are in an "or" relationship.

**In** embodiments of the present disclosure, term "multiple" refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without creative work are within the scope of the present disclosure.

The following is an introduction to the related technologies involved in this disclosure.

1. Multi-carrier scheduling and multi-carrier joint information indicator field (or called Type 1B indicator field)

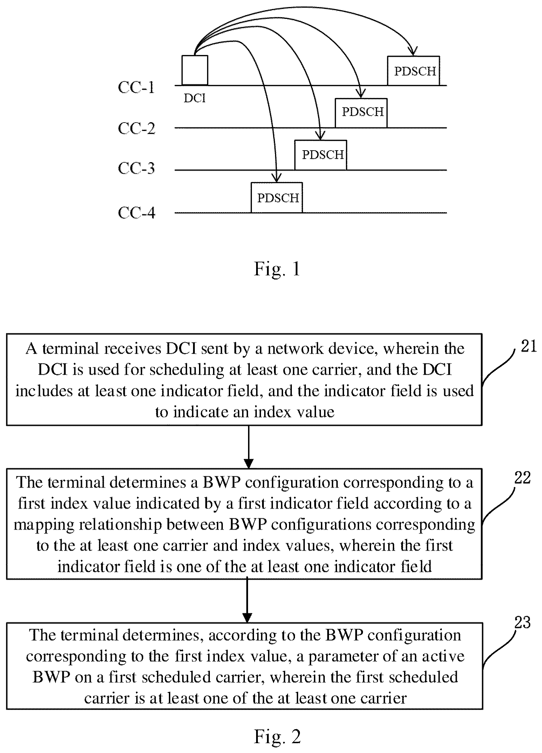

In the technical solution employing one DCI to schedule PDSCH or PUSCH on multiple carriers, for example, the multi-carrier scheduling DCI simultaneously schedules PDSCHs on four carriers (component carrier, CC), as shown in Fig. 1, the multi-carrier scheduling DCI simultaneously schedules PDSCHs on CC-1, CC-2, CC-3 and CC-4.

Since the DCI size of multi-carrier scheduling DCI is bounded by the upper limit of 164 bits, indicator fields of the rate matching indicator, ZP CSI-RS, TCI, SRS request, and SRS offset in the multi-carrier scheduling DCI are designed as Type 1B DCI indicator fields, so as to reduce the lengths of these DCI indicator fields. Type 1B refers to that one DCI indicator field is used to indicate the respective parameters of multiple carriers of the multi-carrier scheduling through a joint indication method. Specifically, a table containing configuration information of multiple carriers can be configured by the higher layer, and each row of information in the table is used to indicate parameters on multiple carriers. The Type-1B indicator field points to the rows of information in the table, and the size of the indicator field can be determined by the number of rows in the table.

2. Rate matching indicator field in DCI

According to the higher layer parameters RMR pattern group 1 (rateMatchPatternGroup1) and RMR pattern group 2 (rateMatchPatternGroup2), the length of the indicator field is determined to be 0, 1, and 2 bits. The most significant bit (MSB) can be used to indicate RMR pattern group 1, and the least significant bit (LSB) can be used to indicate RMR pattern group 2. The RMR pattern group is a resource combination including multiple RMR patterns configured by the higher layer. If the RMR indicator field in the DCI indicates 1, the resource combination of the corresponding RMR pattern group cannot be used by PDSCH. In addition, the RMR pattern is divided into two types: cell-level and BWP-level. The BWP-level RMR pattern can be used to support rate matching for CSI-RS, control resource set (CORESET), etc. The cell-level RMR pattern is used to configure reserved resources to ensure forward compatibility.

3. ZP CSI-RS trigger field in DCI

The length of the field is determined to be $\lceil \log_2(n_{ZP} + 1) \rceil$ bits according to the number of aperiodic ZP CSI-RS resource sets configured by the higher layer. The higher layer configures aperiodic ZP CSI-RS resource sets and corresponding IDs for each BWP. For example, ZP CSI-RS trigger codepoint=01 triggers the resource set of ZP-CSI-RS-ResourceSetId=1, ZP CSI-RS trigger codepoint=10 triggers the resource set of ZP-CSI-RS-ResourceSetId=2, ZP CSI-RS trigger codepoint=11 triggers the resource set of ZP-CSI-RS-ResourceSetId=3, and ZP CSI-RS trigger codepoint=00 is reserved and does not trigger a resource set.

4. TCI indicator field in DCI

If the higher layer parameter configuration enables TCI present in DCI (tci-PresentInDCI), the length of this field is determined to be 3 bits; otherwise, it is 0 bit. The terminal receives a medium access control control element (MAC CE) sent by the higher layer, to activate up to 8 TCI states, where each TCI state corresponding to one TCI indicator codepoint. The MAC CE is divided into two types: activation command for carrier, and activation command for BWP.

5. BWP

A maximum of 4 BWPs can be configured on each carrier, but only one of them is active. For one carrier, the active BWP ID can be determined by RRC parameter configuration or MAC CE or DCI dynamic switching. One multi-carrier scheduling DCI supports scheduling 4 carriers, and the active BWP on each carrier can be the same or different. Therefore, there are up to 256 combinations of active BWPs on all carriers.

In single-carrier scheduling, the BWP configuration corresponding to the DCI field includes two types: cell level and bandwidth part (BWP) level. For BWP level configuration, the higher layer can configure different parameters according to the situation of each BWP. Since there are different BWPs on each carrier and the higher layer information configurations for the BWPs are independent of each other, a wide variety of multi-carrier BWP combination types are generated, which requires a larger number of higher layer parameter configurations. For example: up to 4 BWPs can be configured in each carrier, and the active BWP of each carrier can be switched through RRC indication, timer-based switching or DCI dynamic indication. In this way, when considering scheduling multiple carriers through one DCI (up to 4 carriers can be scheduled), there are up to 256 combinations of active BWPs of the carriers. If the higher layer provides one corresponding multi-carrier combination information combination table for each combination of active BWPs of multiple carriers, the higher layer needs to configure up to 256 tables. On the one hand, the terminal needs to determine the corresponding relationship between the combinations of active BWPs of multiple carriers and the tables; on the other hand, the network device has to configure more information, resulting in a large signaling overhead.

Embodiments of the present disclosure provide an information processing method and apparatus, terminal and network device, which can solve the problem that there is no specific solution for how a multi-carrier scheduling DCI indicates the parameters of the active BWP of one or more carriers, and also provide a method for configuring the BWP of multiple carriers, so as to reduce the overhead of configuration signaling. The method and the apparatus (or terminal or network device) are based on the same creative concept, and since the principles of solving the problem by the method and the apparatus (or terminal or network device) are similar, for the implementation of one of the method and the apparatus (or terminal or network device), reference can be made to the other of the method and the apparatus (or terminal or network device), and the repeated descriptions will be omitted.

As shown in Fig. 2, an embodiment of the present disclosure provides an information processing method, which specifically includes the following steps 21 to 23.

Step 21: A terminal receives DCI sent by a network device, wherein the DCI is used for scheduling at least one carrier, and the DCI includes at least one indicator field, and the indicator field is used to indicate an index value.

Optionally, one DCI may be configured to schedule at least one carrier, that is, one DCI may be configured to schedule one or more (i.e., at least two) carriers. For example, one DCI may be configured to schedule one carrier, or may be configured to schedule multiple (i.e., at least two) carriers; alternatively, a first type of DCI may be configured to schedule one carrier, and a second type of DCI may be configured to schedule at least one carrier, etc. The embodiments of the present disclosure are not limited thereto.

Optionally, the at least one indicator field may be indicator fields for indicating different parameters, e.g., the indicator field including but not limited to at least one or more of the following:

    a rate matching indicator field;
    a ZP CSI-RS indicator field;
    a TCI indicator field;
    an SRS request indicator field;
    an SRS offset indicator field.

Optionally, the indicator field may be referred to as a Type 1B indicator field, or may be referred to as a multi-carrier joint indicator field, etc., but the embodiments of the present disclosure are not limited thereto.

Step 22: The terminal determines a BWP configuration corresponding to a first index value indicated by a first indicator field according to a mapping relationship between BWP configurations corresponding to the at least one carrier and index values, wherein the first indicator field is one of the at least one indicator field.

Optionally, the mapping relationship may be jointly configured for all carriers that the DCI is used for scheduling, or may be configured individually for each carrier, or may be configured individually for each BWP of each carrier, and the embodiments of the present disclosure are not limited thereto.

It should be noted that the first indicator field is one of the at least one indicator field, and it can also be understood that the first indicator field is any one of the at least one indicator field, that is, one index value can be determined for each indicator field of the at least one indicator field. In this way, according to the mapping relationship corresponding to a indicator field, the BWP configuration corresponding to the index value indicated by the indicator field can be determined.

Step 23: The terminal determines, according to the BWP configuration corresponding to the first index value, a parameter of an active BWP on a first scheduled carrier, wherein the first scheduled carrier is at least one of the at least one carrier.

Optionally, the BWP configuration includes at least one parameter of the BWP, e.g., the parameter may be a resource corresponding to the rate matching of the BWP, a resource set corresponding to the BWP, a TCI state of the BWP, an SRS request, an SRS offset, etc. For example, the indicator field is a rate matching indicator field, and the BWP configuration corresponding to the first index value indicated by the indicator field is: the active BWP on the first scheduled carrier corresponds to "01", then it is determined that the RB resources corresponding to the RMR pattern group 2 of the active BWP on the first scheduled carrier cannot be used by PDSCH.

Optionally, one BWP configuration may include: one parameter of at least one BWP, e.g., one BWP configuration only configures one of: resources corresponding to the rate matching of the BWP, the resource set corresponding to the BWP, the TCI state of the BWP, the SRS request, the SRS offset and the like; or one BWP configuration may also include: multiple parameters of each BWP of at least one BWP, e.g., one BWP configuration configures at least two of: resources corresponding to the rate matching of the BWP, the resource set corresponding to the BWP, the TCI state of the BWP, the SRS request, the SRS offset and the like. The embodiments of the present disclosure are not limited to this.

In the above scheme, the terminal receives a DCI sent by a network device that is configured to schedule at least one carrier, and the DCI contains at least one indicator field, so that the terminal can determine a BWP configuration corresponding to a first index value indicated by a first indicator field according to the first index value indicated by the first indicator field in the at least one indicator field and the mapping relationship between the BWP configurations corresponding to the at least one carrier and the index values, and the terminal can determine a parameter of an active BWP on the first scheduled carrier according to the BWP configuration corresponding to the first index value, thereby realizing that the DCI for scheduling one or more carriers indicates a parameter of an active BWP of the one or more scheduled carriers.

Optionally, the information processing method further includes:
receiving, by the terminal, a higher layer signaling sent by the network device, wherein the higher layer signaling includes the mapping relationship.

For example, before the network device sends the DCI to the terminal, the network device may configure a mapping relationship between BWP configurations corresponding to the at least one carrier and index values for the terminal through higher layer signaling, to implement multi-carrier joint scheduling indication.

Optionally, the mapping relationship includes one of the following:

a first mapping relationship between a first BWP configuration and index values; wherein the at least one carrier corresponds to one first mapping relationship, and the first BWP configuration includes BWP configurations corresponding to all BWPs respectively on each carrier of the at least one carrier; or, the first BWP configuration includes BWP configurations corresponding to all BWPs respectively on each carrier of a carrier set, and the carrier set includes all carriers that the DCI is used for scheduling;

a second mapping relationship between a second BWP configuration and index values; wherein each BWP on each carrier of the at least one carrier corresponds to one second mapping relationship, and the second BWP configuration is a BWP configuration corresponding to one BWP;

a third mapping relationship between a third BWP configuration and index values, wherein each carrier of the at least one carrier corresponds to one third mapping relationship, and the third BWP configuration includes BWP configurations corresponding to all BWPs respectively on one carrier.

Specifically, for the first mapping relationship, the BWP configuration is jointly configured for at least one carrier that the DCI is used for scheduling, or the BWP configuration is jointly configured for the carrier set (or cell set) that the DCI is used for scheduling. For example: the network device configures one table or list (that is, the first mapping relationship) for one carrier set, and the table or list contains the BWP configurations of all BWPs on each carrier in this carrier set. Specifically, the table or list contains L rows of information (that is, containing L index values); each index value corresponds to a different BWP configuration for all carriers in the carrier set (e.g., a row of one index value corresponds to a BWP configuration of all carriers in the carrier set, and the BWP configurations of different rows are different from each other, and the BWP configuration in each row for each carrier is the BWP configurations corresponding to all BWPs of the carrier).

Optionally, the table or list (i.e., the first mapping relationship) may cascade BWP configurations corresponding to different BWPs in a fixed order. The numbers of BWPs on different carriers are independently configured, and the number of BWPs on different carriers may be the same or different.

Optionally, the number of bits of the indicator field is determined by the number of index values in the mapping relationship. Specifically, the number of bits of the indicator field is: $\lceil log_2 L \rceil$, where L is the number of index values.

Optionally, the number of bits of the indicator field being determined by the number of the index values in the mapping relationship includes: when the mapping relationship is the first mapping relationship, the number of bits of the indicator field is determined by the number of the index values in the first mapping relationship. For example: for the first mapping relationship, the number of bits of the indicator field is: $\lceil log_2 L \rceil$, L is the number of rows in the table or list (or the number of index values in the table or list), $\lceil X \rceil$ indicating that X is rounded up.

Further, in a case that the terminal has determined the active BWP on the first scheduled carrier, the BWP configurations of all carriers corresponding to the first index value in the table or list can be determined according to the first index value indicated by the first indicator field in the DCI, so that the terminal can determine the BWP configuration of the first scheduled carrier from the BWP configurations of all carriers corresponding to the first index value, and since each row in the table or list is the BWP configuration of all BWPs for each carrier, the terminal can further determine the BWP configuration corresponding to the active BWP according to the BWP configuration of the first scheduled carrier, thereby obtaining the parameters of the active BWP. The active BWP ID can be indicated by RRC configuration or MAC CE or DCI. If BWP switching occurs after the RRC configuration or MAC CE indication or DCI indication, the terminal obtains the BWP parameters indicated by the indicator field of the DCI according to the active BWP after switching.

Specifically, for the second mapping relationship, a BWP configuration is independently configured for each BWP of each carrier in at least one carrier that the DCI is used for scheduling. For example, the network device configures one table or list for each BWP of each carrier, and the table or list contains different BWP configurations of one BWP. Specifically, the table or list contains L rows of information (that is, containing L index values); each index value corresponds to one BWP configuration.

Optionally, for different BWPs of different carriers or the same carrier, each table or list is independently configured. The index values of different tables or lists may be the same or different.

Optionally, the number of bits of the indicator field is determined by the number of index values in the mapping relationship. Specifically, the number of bits of the indicator field is: $\lceil log_2 L \rceil$, where L is the number of index values.

Optionally, the number of bits of the indicator field being determined by the number of the index values in the mapping relationship includes: when the mapping relationship is the second mapping relationship, the number of bits of the indicator field is determined by the maximum number of index values in the second mapping relationship. For example, for the second mapping relationship, the number of bits of the indicator field is: $\lceil log_2 L \rceil$, L can be the maximum number of index values in the tables or lists corresponding to active BWPs, or L can be the maximum number of index values in the tables or lists corresponding to all carriers.

Optionally, the number of bits of the indicator field being determined by the maximum number of the index values in the second mapping relationship includes:

the number of bits of the indicator field is determined by the maximum number of the index values in the second mapping relationships corresponding to active BWPs; for example: the DCI is used for scheduling multiple carriers (CCs), including CC1, CC2, CC3 and CC4; wherein, the maximum number of index values in the table or list corresponding to the active BWP on CC1 is $L_{max}^{CC1}$, the maximum number of index values in the table or list corresponding to the active BWP on CC2 is $L_{max}^{CC2}$, the maximum number of index values in the table or list corresponding to the active BWP on CC3 is $L_{max}^{CC3}$, and the maximum number of index values in the table or list corresponding to the active BWP on CC4 is $L_{max}^{CC4}$, then the number of bits of the indicator field is determined by the maximum number of index values in the tables or lists corresponding to the active BWPs on all carriers, that is,

$$L_{max} = \max\{L_{active}^{CC1}, L_{active}^{CC2}, L_{active}^{CC3}, L_{active}^{CC4}\}$$, and the number of bits of the indicator field is $\lceil log_2 L_{max} \rceil$;

or,

the number of bits of the indicator field is determined by the maximum number of the index values in the second mapping relationships corresponding to all BWPs on the at least one carrier; for example: the DCI is used for scheduling multiple carriers, including CC1, CC2 and CC3; wherein, BWP1 (the maximum number of index values in the table or list corresponding to BWP1 is $L_{max}^{CC1,bwp1}$) and BWP2 (the maximum number of index values in the table or list corresponding to BWP2 is $L_{max}^{CC1,bwp2}$) are configured on CC1, BWP1 (the maximum number of index values in the table or list corresponding to BWP1 is $L_{max}^{CC2,bwp1}$) and BWP2 (the maximum number of index values in the table or list corresponding to BWP2 is $L_{max}^{CC2,bwp2}$) are configured on CC2, and BWP1 (the maximum number of index values in the table or list corresponding to BWP1 is $L_{max}^{CC3,bwp1}$) is configured on CC3, then the number of bits of the indicator field is determined by the maximum number of index values in the tables or lists corresponding to all BWPs in all carriers, that is,

$$L_{max} = \max\{\max\{L_{max}^{CC1,bwp1}, L_{max}^{CC1,bwp2}\}, \max\{L_{max}^{CC2,bwp1}, L_{max}^{CC2,bwp2}\}, \max\{L_{max}^{CC3,bwp1}\}\}$$,

and the number of bits of the indicator field is $\lceil log_2 L_{max} \rceil$.

Optionally, for a deactivated carrier, the maximum number of index values in the tables or lists corresponding to all BWPs in the carrier is 0.

Specifically, for the third mapping relationship, the BWP configuration is independently configured for each carrier in at least one carrier that the DCI is used for scheduling. For example, the network device configures one table or list for each carrier, and the table or list contains the BWP configurations of all BWPs of one carrier. Specifically, the table or list contains L rows of information (that is, containing L index values); each index value corresponds to different BWP configurations of all BWPs of the carrier.

Optionally, the number of bits of the indicator field is determined by the number of index values in the mapping relationship. Specifically, the number of bits of the indicator field is: $\lceil log_2 L \rceil$ , where L is the number of index values.

Optionally, the number of bits of the indicator field being determined by the number of the index values in the mapping relationship includes: when the mapping relationship is the third mapping relationship, the number of bits of the indicator field is determined by the maximum number of index values in the third mapping relationship. For example: the DCI is used for scheduling multiple carriers (CCs), including CC1, CC2, CC3 and CC4; wherein the maximum number of index values in the table or list corresponding to CC1 is $L_{max}^{CC1}$ , the maximum number of index values in the table or list corresponding to CC2 is $L_{max}^{CC2}$ , the maximum number of index values in the table or list corresponding to CC3 is $L_{max}^{CC3}$ , the maximum number of index values in the table or list corresponding to CC4 is $L_{max}^{CC4}$ , then $L_{max} = \max \{L_{max}^{CC1}, L_{max}^{CC2}, L_{max}^{CC3}, L_{max}^{CC4}\}$ , and the number of bits of the indicator field is $\lceil log_2 L_{max} \rceil$ .

Optionally, after the terminal receives the DCI sent by the network device, the method further includes: determining, by the terminal, the first index value corresponding to the first scheduled carrier according to a numerical value indicated by N bits in the indicator field, wherein N≤M, N and M are positive integers, and M is the number of bits of the indicator field.

In this embodiment, the terminal reads the numerical value indicated by the N bits in the indicator field, in this way, scheduling of the BWP parameters of multiple carriers through the indicator field in the DCI is achieved, which is beneficial to reduce signaling overhead, and when the numbers of index values in different tables or lists are different, it can ensure that the terminal and the network device can accurately know the content of the scheduling information.

Optionally, the determining, by the terminal, the first index value corresponding to the first scheduled carrier according to the numerical value indicated by N bits in the indicator field includes:

in a case that the numerical value indicated by the N bits does not fall within an index value range corresponding to the first scheduled carrier, ignoring, by the terminal, the indicator field; for example, ignoring, by the terminal, the information indicator field may refer to that the terminal does not perform related scheduling processing in response to a scheduling instruction (i.e., DCI) of the network device, and;

or,

in a case that the numerical value indicated by the N bits does not fall within an index value range corresponding to the first scheduled carrier, determining, by the terminal, the first index value according to the numerical value indicated by the N bits; optionally, the first index value falls within the index value range corresponding to the first scheduled carrier; for example: the determining the first index value according to the numerical value indicated by the N bits may be by way of a calculation according to a preset rule; or, a preset numerical value corresponding to the numerical value indicated by the N bits is determined according to a preconfigured mapping relationship, and the preset numerical value is determined as the first index value, etc., the embodiments of the present disclosure are not limited thereto;

or,

in a case that the numerical value indicated by the N bits falls within the index value range corresponding to the first scheduled carrier, determining, by the terminal, the numerical value indicated by the N bits as the first index value.

The terminal involved in the embodiments of the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

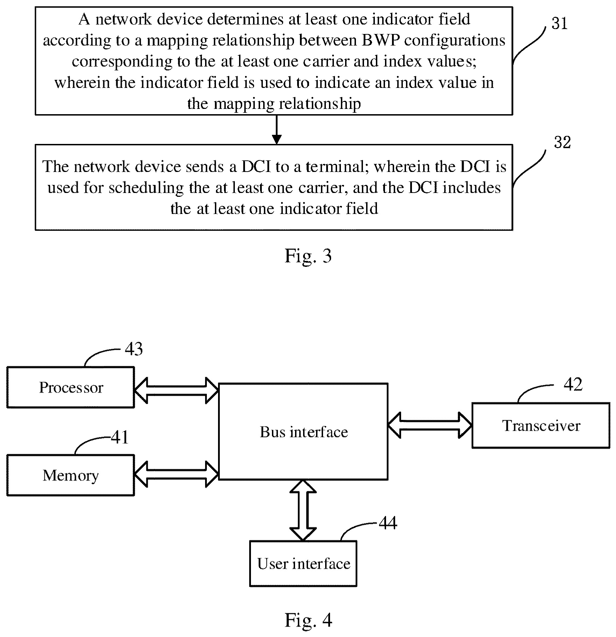

As shown in Fig. 3, an embodiment of the present disclosure provides an information processing method, including the following steps 31 and 32.

Step 31: A network device determines at least one indicator field according to a mapping relationship between BWP configurations corresponding to the at least one carrier and index values; wherein the indicator field is used to indicate an index value in the mapping relationship.

Step 32: The network device sends a DCI to the terminal; wherein the DCI is used for scheduling the at least one carrier, and the DCI includes the at least one indicator field.

Optionally, the information processing method further includes:

sending, by the network device, a higher layer signaling to the terminal; wherein the higher layer signaling includes the mapping relationship.

Optionally, the number of bits of the indicator field is determined by the number of index values in the mapping relationship. Specifically, the number of bits of the indicator field is: $\lceil log_2 L \rceil$, where L is the number of index values.

Optionally, the mapping relationship includes one of the following:

a first mapping relationship between a first BWP configuration and index values; wherein the at least one carrier corresponds to one first mapping relationship, and the first BWP configuration includes BWP configurations corresponding to all BWPs respectively on each carrier of the at least one carrier; or, the first BWP configuration includes BWP configurations corresponding to all BWPs respectively on each carrier of a carrier set, and the carrier set includes all carriers that the DCI is used for scheduling;

a second mapping relationship between a second BWP configuration and index values; wherein each BWP on each carrier of the at least one carrier corresponds to one second mapping relationship, and the second BWP configuration is a BWP configuration corresponding to one BWP;

a third mapping relationship between a third BWP configuration and index values, wherein each carrier of the at least one carrier corresponds to one third mapping relationship, and the third BWP configuration includes BWP configurations corresponding to all BWPs respectively on one carrier.

Optionally, the number of bits of the indicator field being determined by the number of the index values in the mapping relationship includes:

in a case that the mapping relationship is the first mapping relationship, the number of bits of the indicator field is determined by the number of the index values in the first mapping relationship;
or,
in a case that the mapping relationship is the second mapping relationship or the third mapping relationship, the number of bits of the indicator field is determined by a maximum number of the index values in the second mapping relationship or the third mapping relationship.

Optionally, the number of bits of the indicator field being determined by the maximum number of the index values in the second mapping relationship includes:

the number of bits of the indicator field is determined by the maximum number of the index values in the second mapping relationships corresponding to active BWPs;
or,
the number of bits of the indicator field is determined by the maximum number of the index values in the second mapping relationships corresponding to all BWPs on the at least one carrier.

Optionally, the indicator field includes at least one of the following:

a rate matching indicator field;
a ZP CSI-RS indicator field;
a TCI indicator field;
an SRS request indicator field; or
an SRS offset indicator field.

Optionally, the N bits in the first indicator field are used to indicate a first index value of a first scheduled carrier, wherein the first indicator field is one of the at least one indicator field, the first scheduled carrier is one of the at least one carrier, N≤M, N and M are positive integers, and M is the number of bits of the indicator field.

Optionally, when the sum of the numbers of bits occupied by the at least one carrier is less than or equal to the number of all bits contained in the indicator field, the bits in the indicator field that are occupied by one carrier of the at least one carrier are different from the bits in the indicator field that are occupied by another carrier of the at least one carrier.

It should be noted that the information processing method on the network device side of the embodiment of the present disclosure corresponds to the information processing method on the terminal side mentioned above, and for the implementation of one of them, reference can be made to the other of them, and they can achieve the same technical effect. To avoid repetition, the repeated descriptions will be omitted.

The network device involved in the embodiments of the present disclosure may be a base station, which may include multiple cells providing services to terminals. Depending on the specific application scenario, the base station may also be called an access point, or may be a device in an access network that communicates with a wireless terminal device through one or more sectors on an air interface, or may be another name. The network device may be used to interchange received air frames with Internet Protocol (IP) packets, and serve as a router between the wireless terminal device and the rest of the access network, wherein the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device (eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

The signal processing method of the present disclosure is described below in conjunction with specific embodiments.

Embodiment 1: Jointly configure BWP configurations for multiple carriers

This embodiment takes the rate matching indicator as an example to illustrate a solution for a higher layer to jointly configure BWP configurations for multiple carriers.

For example, one carrier set includes CC1, CC2, CC3 and CC4, where:

CC1: 1 BWP is configured, BWP ID = 0;
CC2: 2 BWPs are configured, BWP ID=0, BWP ID=1;
CC3: 3 BWPs are configured, BWP ID=0, BWP ID=1, BWP ID=2;
CC4: 4 BWPs are configured, BWP ID=0, BWP ID=1, BWP ID=2, BWP ID=3.

In the above scenario, a table of BWP-level RMR pattern group indication information that is configured by the network device (taking the base station as an example) for the terminal is shown in Table 1 below:

Table 1

| Index value | CC1 | CC2 | CC3 | CC4 |
|---|---|---|---|---|
| 1 | BWP0(00) | BWP0(00)<br>BWP1(00) | BWP0(00)<br>BWP1(00)<br>BWP2(00) | BWP0(00)<br>BWP1(00)<br>BWP2(00)<br>BWP3(00) |
| 2 | BWP0(01) | BWP0(01)<br>BWP1(10) | BWP0(00)<br>BWP1(10)<br>BWP2(10) | BWP0(00)<br>BWP1(10)<br>BWP2(11)<br>BWP3(11) |
| 3 | BWP0(10) | BWP0(01)<br>BWP1(10) | BWP0(01)<br>BWP1(10)<br>BWP2(10) | BWP0(11)<br>BWP1(10)<br>BWP2(10)<br>BWP3(11) |
| 4 | BWP0(11) | BWP0(01)<br>BWP1(10) | BWP0(01)<br>BWP1(10) | BWP0(01)<br>BWP1(10) |

(continued)

| Index value | CC1 | CC2 | CC3 | CC4 |
|---|---|---|---|---|
| | | | BWP2(10) | BWP2(10) BWP3(11) |

It should be noted that the BWP configuration corresponding to each CC in each row may be configured as a bitmap, and the parameters corresponding to each BWP are cascaded in a fixed order.

The bit length of the rate matching indicator field in the DCI is determined by the number of index values in the table, that is, $\lceil log_2 4 \rceil = 2$ bits.

When the terminal has learned that the active BWP on CC1 is BWP ID=0, the active BWP on CC2 is BWP ID=1, the active BWP on CC3 is BWP ID=1, and the active BWP on CC4 is BWP ID=2, if the index value indicated by the rate matching indicator field in the DCI is 2, the method for the terminal to parse the rate matching indicator field is as follows.

The terminal decodes the rate matching indicator field in DCI to learn that the index value is 2, which corresponds to that the higher layer has configured, for the carrier set, the row information with index value = 2 in the table.

For CC1, the terminal reads the higher layer parameter "01" corresponding to BWP ID=0, where the first bit represents RMR pattern group 1 configured for BWP0 on CC1, and the second bit represents RMR pattern group 2 configured for BWP0 on CC1. "01" indicates that the RB resources corresponding to RMR pattern group 2 cannot be used by PDSCH.

For CC2, the terminal reads the higher layer parameter "10" corresponding to BWP ID=1, where the first bit represents RMR pattern group 1 configured for BWP1 on CC2, and the second bit represents RMR pattern group 2 configured for BWP1 on CC2. "10" indicates that the RB resources corresponding to RMR pattern group 1 cannot be used by PDSCH.

For CC3, the terminal reads the higher layer parameter "10" corresponding to BWP ID=1, where the first bit represents RMR pattern group 1 configured for BWP1 on CC3, and the second bit represents RMR pattern group 2 configured for BWP1 on CC3. "10" indicates that the RB resources corresponding to RMR pattern group 1 cannot be used by PDSCH.

For CC4, the terminal reads the higher layer parameter "11" corresponding to BWP ID=2, where the first bit represents RMR pattern group 1 configured for BWP2 on CC4, and the second bit represents RMR pattern group 2 configured for BWP2 on CC4. "11" indicates that the RB resources corresponding to RMR pattern group 1 and RMR pattern group 2 cannot be used by PDSCH.

It should be noted that if the configuration parameter of the carrier CCn corresponding to the indicated index value is empty, or the configuration parameter of the active BWP of the carrier CCn is empty, the terminal ignores this indication information for the active BWP of CCn. If BWP switching occurs through RRC configuration, MAC CE indication or DCI dynamic indication, the terminal reads the corresponding higher layer parameters in the table according to the BWP ID that is switched to.

Embodiment 2: Independently configure BWP configuration for each BWP of a single carrier

This embodiment takes the ZP CSI-RS trigger field as an example to illustrate a solution in which a higher layer independently configures a BWP configuration for each BWP of a single carrier.

For example, one carrier set includes CC1, CC2, CC3 and CC4, where:

CC1: 1 BWP is configured, BWP ID = 0;
CC2: 2 BWPs are configured, BWP ID=0, BWP ID=1;
CC3: 3 BWPs are configured, BWP ID=0, BWP ID=1, BWP ID=2.

In the above scenario, the network device (taking the base station as an example) configures the BWP-level ZP CSI-RS trigger information for the terminal in the following way.

For CC1, the base station configures higher layer information for BWP 0 as shown in Table 2-1:

Table 2-1

| Index value (BWPO) | CC1 |
|---|---|
| 1 | 00 |
| 2 | 01 |

(continued)

| Index value (BWPO) | CC1 |
|---|---|
| 3 | 10 |
| 4 | 11 |

For CC2, the base station configures higher layer information for BWP 0 as shown in Table 2-2:

Table 2-2

| Index value (BWPO) | CC2 |
|---|---|
| 1 | 00 |
| 2 | 01 |
| 3 | 10 |
| 4 | 11 |
| 5 | 00 |
| 6 | 01 |

For CC2, the base station configures higher layer information for BWP 1 as shown in Table 2-3:

Table 2-3

| Index value (BWP1) | CC2 |
|---|---|
| 1 | 00 |
| 2 | 00 |
| 3 | 01 |
| 4 | 01 |
| 5 | 10 |

For CC3, the base station configures higher layer information for BWP 0 as shown in Table 2-4:

Table 2-4

| Index value (BWPO) | CC1 |
|---|---|
| 1 | 00 |
| 2 | 01 |
| 3 | 10 |
| 4 | 11 |
| 5 | 11 |

For CC3, the base station configures higher layer information for BWP1 as shown in Table 2-5:

Table 2-5

| Index value (BWP1) | CC1 |
|---|---|
| 1 | 00 |
| 2 | 01 |
| 3 | 10 |
| 4 | 11 |

For CC3, the base station configures higher layer information for BWP2 as shown in Table 2-6:

Table 2-6

| Index value (BWP1) | CC1 |
|---|---|
| 1 | 00 |
| 2 | 01 |
| 3 | 10 |
| 4 | 11 |
| 5 | 11 |
| 6 | 11 |
| 7 | 10 |
| 8 | 10 |
| 9 | 11 |

When the terminal has learned that the active BWP on CC1 is BWP ID=0, the active BWP on CC2 is BWP ID=1, and the active BWP on CC3 is BWP ID=1, the bit length of the ZP CSI-RS trigger field in the DCI is determined as follows:

the bit length is determined by the maximum index value of the tables corresponding to active BWPs on all CCs in one carrier set;

according to the active BWP configured by the higher layer for each carrier in the carrier set, the maximum index value corresponding to the carrier set $L_{max} = \max\{L_{active}^{CC1}, L_{active}^{CC2}, L_{active}^{CC3}\} = \max\{4,5,4\} =$ is $5$; and the bit length of the ZP CSI-RS trigger field is $\lceil log_2 L_{max}\rceil = \lceil log_2 5\rceil = 3$ bits.

or,

the bit length is determined by the maximum index value of the tables corresponding to all BWPs in all CCs in one carrier set;

according to the information configured by the higher layer for all BWPs in all carriers of the carrier set, the maximum index value corresponding to this carrier set is:

$$L_{max} =$$

$$\max\{\max\{L_{max}^{CC1,bwp1}\}, \max\{L_{max}^{CC2,bwp1}, L_{max}^{CC2,bwp2}\}, \max\{L_{max}^{CC3,bwp1},$$

$$L_{max}^{CC3,bwp2}, L_{max}^{CC3,bwp3}\}\} = max\{max\{4\}, max\{6,5\}, max\{5,4,9\}\} = 9;$$

and the bit length of the ZP CSI-RS trigger field is $\lceil log_2 L_{max}\rceil = \lceil log_2 9\rceil = 4$ bits.

If the index value indicated by the ZP CSI-RS trigger field in the DCI is 01, the method for the terminal to parse the ZP CSI-RS trigger field is as follows.

The terminal decodes the ZP CSI-RS trigger field in DCI to learn that the index value is 4, which corresponds to that the higher layer has configured, for the carrier set, the row information with index value = 4 in the table.

For CC1, the terminal reads the configuration of index value = 4 in the table corresponding to BWP ID=0 as "11", which corresponds to triggering the resource set of ZP-CSI-RS-ResourceId=3 on BWP0 in CC1.

For CC2, the terminal reads the configuration of index value = 4 in the table corresponding to BWP ID = 1 as "01", which corresponds to triggering the resource set of ZP-CSI-RS-ResourceId=1 on BWP1 in CC2.

For CC3, the terminal reads the configuration of index value = 4 in the table corresponding to BWP ID = 1 as "11", which corresponds to triggering the resource set of ZP-CSI-RS-ResourceId=3 on BWP1 in CC3.

It should be noted that if a carrier is deactivated, the maximum index value corresponding to the carrier = 0.

Embodiment 3: Independently configure the BWP configuration for each carrier

This embodiment takes the rate matching indicator as an example to illustrate a solution in which a higher layer independently configures BWP configurations for a single carrier.

For example, one carrier set includes CC1, CC2, CC3 and CC4, where:

CC1: 1 BWP is configured, BWP ID=0;
CC2: 2 BWPs are configured, BWP ID=0, BWP ID=1;
CC3: 3 BWPs are configured, BWP ID=0, BWP ID=1, BWP ID=2;
CC4: 4 BWPs are configured, BWP ID=0, BWP ID=1, BWP ID=2, BWP ID=3.

In the above scenario, the table of the BWP-level RMR pattern group indication information that is configured by the network device (taking the base station as an example) for the terminal is as follows.

The information configured by the base station for CC1 is shown in Table 3-1:

Table 3-1

| Index value | CC1 |
|---|---|
| 1 | BWP0(00) |
| 2 | BWP0(01) |
| 3 | BWP0(10) |
| 4 | BWP0(11) |

The information configured by the base station for CC2 is shown in Table 3-2 below:

Table 3-2

| Index value | CC2 |
|---|---|
| 1 | BWP0(00) BWP1(00) |
| 2 | BWP0(01) BWP1(10) |
| 3 | BWP0(01) BWP1(10) |
| 4 | BWP0(01) BWP1(10) |

The information configured by the base station for CC3 is shown in Table 3-3:

Table 3-3

| Index value | CC3 |
|---|---|
| 1 | BWP0(00) BWP1(00) BWP2(00) |
| 2 | BWP0(00) BWP1(10) BWP2(10) |
| 3 | BWP0(01) BWP1(10) BWP2(10) |

(continued)

| Index value | CC3 |
|---|---|
| 4 | BWP0(01) BWP1(10) BWP2(10) |
| 5 | BWP0(11) BWP1(11) BWP2(11) |

The information configured by the base station for CC4 is shown in Table 3-4:

Table 3-4

| Index value | CC4 |
|---|---|
| 1 | BWP0(00) BWP1(00) BWP2(00) BWP3(00) |
| 2 | BWP0(00) BWP1(10) BWP2(11) BWP3(11) |
| 3 | BWP0(11) BWP1(10) BWP2(10) BWP3(11) |
| 4 | BWP0(01) BWP1(10) BWP2(10) BWP3(11) |

The bit length of the rate matching indicator field in the multi-carrier scheduling DCI is determined by the maximum index value in the tables corresponding to all carriers in the carrier set. For example, the maximum value among the above tables is 5, so the length of the rate matching indicator field is $\lceil \log_2 8 \rceil = 3$ bits.

It should be noted that the above embodiments are illustrated with reference to the rate matching indicator field and the ZP CSI-RS trigger field, but it should be understood that the method in the above embodiments can also be applied to the TCI indicator field, the SRS request field, the SRS offset indicator field, or the like.

In the above scheme, since the DCI size is limited by the total length of 164 bits, the above indicator field is introduced when designing DCI for scheduling one or more carriers, to reduce the bit overhead required to indicate multiple carriers. In addition, the present disclosure effectively reduces the signaling overhead of the higher layer configuration while ensuring the flexibility of the higher layer configuration, through the higher layer configuration method of the BWP configuration of at least one carrier that the DCI is used for scheduling.

The above embodiments introduce the information processing method disclosed in the present invention. The following embodiments will further illustrate the corresponding network devices in conjunction with the accompanying drawings.

Specifically, as shown in Fig. 4, an embodiment of the present disclosure provides an information processing apparatus, including a memory 41, a transceiver 42, and a processor 43; wherein the memory 41 is configured to store a computer program; the transceiver 42 is configured to send and receive data under the control of the processor 43; the processor 43 is configured to read the computer program in the memory 41 and perform the following steps:

receiving downlink control information (DCI) sent by a network device, wherein the DCI is used for scheduling at least one carrier, and the DCI includes at least one indicator field, and the indicator field is used to indicate an index value;

determining, according to a mapping relationship between bandwidth part (BWP) configurations corresponding to the at least one carrier and index values, a BWP configuration corresponding to a first index value indicated by a first indicator field, wherein the first indicator field is one of the at least one indicator field;

determining, according to the BWP configuration corresponding to the first index value, a parameter of an active BWP on a first scheduled carrier, wherein the first scheduled carrier is at least one of the at least one carrier.

Optionally, the processor 43 is configured to read the computer program in the memory 41 and perform the following steps:

receiving a higher layer signaling sent by the network device, wherein the higher layer signaling includes the mapping relationship.

Optionally, a number of bits of the indicator field is determined by a number of the index values in the mapping relationship.

Optionally, the number of bits of the indicator field is: $\lceil log_2 L \rceil$ , where L is the number of index values.

Optionally, the mapping relationship includes one of the following:

a first mapping relationship between a first BWP configuration and index values; wherein the at least one carrier corresponds to one first mapping relationship, and the first BWP configuration includes BWP configurations corresponding to all BWPs respectively on each carrier of the at least one carrier; or, the first BWP configuration includes BWP configurations corresponding to all BWPs respectively on each carrier of a carrier set, and the carrier set includes all carriers that the DCI is used for scheduling;

a second mapping relationship between a second BWP configuration and index values; wherein each BWP on each carrier of the at least one carrier corresponds to one second mapping relationship, and the second BWP configuration is a BWP configuration corresponding to one BWP;

a third mapping relationship between a third BWP configuration and index values, wherein each carrier of the at least one carrier corresponds to one third mapping relationship, and the third BWP configuration includes BWP configurations corresponding to all BWPs respectively on one carrier.

Optionally, the number of bits of the indicator field being determined by the number of the index values in the mapping relationship includes:

in a case that the mapping relationship is the first mapping relationship, the number of bits of the indicator field is determined by the number of the index values in the first mapping relationship;

or,

in a case that the mapping relationship is the second mapping relationship or the third mapping relationship, the number of bits of the indicator field is determined by a maximum number of the index values in the second mapping relationship or the third mapping relationship.

Optionally, the number of bits of the indicator field being determined by the maximum number of the index values in the second mapping relationship includes:

the number of bits of the indicator field is determined by the maximum number of the index values in the second mapping relationships corresponding to active BWPs;

or,

the number of bits of the indicator field is determined by the maximum number of the index values in the second mapping relationships corresponding to all BWPs on the at least one carrier.

Optionally, the indicator field includes at least one of the following:

a rate matching indicator field;
a zero power channel state information reference signal (ZP CSI-RS) indicator field;
a transmission configuration indication (TCI) indicator field;
a sounding reference signal (SRS) request indicator field; or
an SRS offset indicator field.

Optionally, the processor 43 is configured to read the computer program in the memory 41 and perform the following step:

determining the first index value corresponding to the first scheduled carrier according to a numerical value indicated by N bits in the indicator field, wherein N≤M, N and M are positive integers, and M is the number of bits of the indicator field.

Optionally, the processor 43 is configured to read the computer program in the memory 41 and perform the following steps:

in a case that the numerical value indicated by the N bits does not fall within an index value range corresponding to the first scheduled carrier, ignoring the indicator field, or determining the first index value according to the numerical value indicated by the N bits;

or,

in a case that the numerical value indicated by the N bits falls within the index value range corresponding to the first scheduled carrier, determining the numerical value indicated by the N bits as the first index value.

In Fig. 4, the bus architecture may include any number of interconnected buses and bridges, specifically one or more processors represented by processor 43 and various circuits of memory represented by memory 41 are linked together. The bus architecture can also link various other circuits such as peripherals, voltage regulators and power management circuits together, which are all well known in the art and are therefore not further described herein. The bus interface provides an interface. The transceiver 42 can be a plurality of components, namely, a transmitter and a receiver, providing a unit for communicating with various other devices on a transmission medium, and these transmission media include transmission media such as wireless channels, wired channels, and optical cables. For different user devices, the user interface 44 can also be an interface that can be connected to external and internal devices, and the connected devices include but are not limited to keypads, displays, speakers, microphones, joysticks, etc.

The processor 43 is responsible for managing the bus architecture and general processing, and the memory 41 can store data used by the processor 600 when performing operations.

Optionally, the processor 43 may be a central processing unit (CPU), an application specific integrated circuit (ASIC), a field programmable gate array (FPGA) or a complex programmable logic device (CPLD), and the processor may also adopt a multi-core architecture.

The processor is configured to implement any of the methods provided by the embodiments of the present disclosure according to the obtained executable instructions by calling the computer program stored in the memory. The processor and the memory can also be arranged physically separately.

It should be noted here that the above-mentioned device provided by the embodiment of the present disclosure can implement all the method steps implemented by the above-mentioned terminal-side information processing method embodiment, and can achieve the same technical effect. The parts and beneficial effects of this embodiment that are the same as the method embodiment will not be described in detail here.

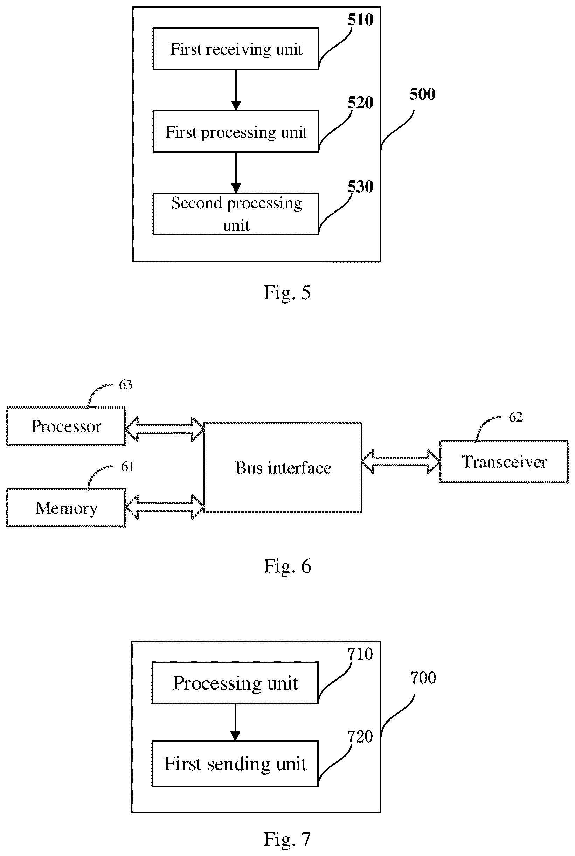

As shown in Fig. 5, an embodiment of the present disclosure provides a terminal 500, including:

a first receiving unit 510, configured to receive downlink control information (DCI) sent by a network device, wherein the DCI is used for scheduling at least one carrier, and the DCI includes at least one indicator field, and the indicator field is used to indicate an index value;

a first processing unit 520, configured to determine a BWP configuration corresponding to a first index value indicated by a first indicator field according to a mapping relationship between bandwidth part (BWP) configurations corresponding to the at least one carrier and index values, wherein the first indicator field is one of the at least one indicator field;

a second processing unit 530, configured to determine, according to the BWP configuration corresponding to the first index value, a parameter of an active BWP on a first scheduled carrier, wherein the first scheduled carrier is at least one of the at least one carrier.

Optionally, the terminal 500 further includes:

a second receiving unit, configured to receive a higher layer signaling sent by the network device; wherein the higher layer signaling includes the mapping relationship.

Optionally, a number of bits of the indicator field is determined by a number of the index values in the mapping relationship.

Optionally, the number of bits of the indicator field is: $\lceil log_2 L \rceil$, where L is the number of index values.

Optionally, the mapping relationship includes one of the following:

a first mapping relationship between a first BWP configuration and index values; wherein the at least one carrier corresponds to one first mapping relationship, and the first BWP configuration includes BWP configurations corresponding to all BWPs respectively on each carrier of the at least one carrier; or, the first BWP configuration includes BWP configurations corresponding to all BWPs respectively on each carrier of a carrier set, and the carrier set includes all carriers that the DCI is used for scheduling;

a second mapping relationship between a second BWP configuration and index values; wherein each BWP on each carrier of the at least one carrier corresponds to one second mapping relationship, and the second BWP configuration is a BWP configuration corresponding to one BWP;

a third mapping relationship between a third BWP configuration and index values, wherein each carrier of the at least one carrier corresponds to one third mapping relationship, and the third BWP configuration includes BWP configurations corresponding to all BWPs respectively on one carrier.

Optionally, the number of bits of the indicator field being determined by the number of the index values in the mapping relationship includes:

in a case that the mapping relationship is the first mapping relationship, the number of bits of the indicator field is determined by the number of the index values in the first mapping relationship;
or,
in a case that the mapping relationship is the second mapping relationship or the third mapping relationship, the number of bits of the indicator field is determined by a maximum number of the index values in the second mapping relationship or the third mapping relationship.

Optionally, the number of bits of the indicator field being determined by the maximum number of the index values in the second mapping relationship includes:

the number of bits of the indicator field is determined by the maximum number of the index values in the second mapping relationships corresponding to active BWPs;
or,
the number of bits of the indicator field is determined by the maximum number of the index values in the second mapping relationships corresponding to all BWPs on the at least one carrier.

Optionally, the indicator field includes at least one of the following:

a rate matching indicator field;
a zero power channel state information reference signal (ZP CSI-RS) indicator field;
a transmission configuration indication (TCI) indicator field;
a sounding reference signal (SRS) request indicator field; or
an SRS offset indicator field.

Optionally, the terminal 500 further includes:
a third processing unit, configured to determine the first index value corresponding to the first scheduled carrier according to the numerical value indicated by the N bits in the indicator field; wherein N≤M, N and M are positive integers, and M is the number of bits of the indicator field.

Optionally, the third processing unit is further configured to:

in a case that the numerical value indicated by the N bits does not fall within an index value range corresponding to the first scheduled carrier, ignore the indicator field, or determine the first index value according to the numerical value indicated by the N bits;
or,
in a case that the numerical value indicated by the N bits falls within the index value range corresponding to the first scheduled carrier, determine the numerical value indicated by the N bits as the first index value.

It should be noted here that the above-mentioned terminal provided in the embodiment of the present disclosure can implement all the method steps implemented in the above-mentioned terminal-side information processing method embodiment, and can achieve the same technical effect. The parts and beneficial effects of this embodiment that are the same as the method embodiment will not be described in detail here.

In order to better achieve the above-mentioned purpose, as shown in Fig. 6, an embodiment of the present disclosure provides an information processing apparatus, including a memory 61, a transceiver 62, and a processor 63; wherein the memory 61 is configured to store a computer program; the transceiver 62 is configured to send and receive data under the control of the processor 63; the processor 63 is configured to read the computer program in the memory 61 and perform the following steps:

determining at least one indicator field according to a mapping relationship between bandwidth part (BWP) configurations corresponding to at least one carrier and index values, wherein the indicator field is used to indicate an index value in the mapping relationship;

sending downlink control information (DCI) to a terminal, wherein the DCI is used for scheduling the at least one carrier, and the DCI includes the at least one indicator field.

Optionally, the processor 63 is configured to read the computer program in the memory 61 and perform the following step:

sending a higher layer signaling to the terminal, wherein the higher layer signaling includes the mapping relationship.

Optionally, the number of bits of the indicator field is determined by the number of index values in the mapping relationship.

Optionally, the number of bits of the indicator field is: $\lceil log_2 L \rceil$ , where L is the number of index values.

Optionally, the mapping relationship includes one of the following:

a first mapping relationship between a first BWP configuration and index values; wherein the at least one carrier corresponds to one first mapping relationship, and the first BWP configuration includes BWP configurations corresponding to all BWPs respectively on each carrier of the at least one carrier; or, the first BWP configuration includes BWP configurations corresponding to all BWPs respectively on each carrier of a carrier set, and the carrier set includes all carriers that the DCI is used for scheduling;

a second mapping relationship between a second BWP configuration and index values; wherein each BWP on each carrier of the at least one carrier corresponds to one second mapping relationship, and the second BWP configuration is a BWP configuration corresponding to one BWP;

a third mapping relationship between a third BWP configuration and index values, wherein each carrier of the at least one carrier corresponds to one third mapping relationship, and the third BWP configuration includes BWP configurations corresponding to all BWPs respectively on one carrier.

Optionally, the number of bits of the indicator field being determined by the number of the index values in the mapping relationship includes:

in a case that the mapping relationship is the first mapping relationship, the number of bits of the indicator field is determined by the number of the index values in the first mapping relationship;
or,
in a case that the mapping relationship is the second mapping relationship or the third mapping relationship, the number of bits of the indicator field is determined by a maximum number of the index values in the second mapping relationship or the third mapping relationship.

Optionally, the number of bits of the indicator field being determined by the maximum number of the index values in the second mapping relationship includes:

the number of bits of the indicator field is determined by the maximum number of the index values in the second mapping relationships corresponding to active BWPs;
or,
the number of bits of the indicator field is determined by the maximum number of the index values in the second mapping relationships corresponding to all BWPs on the at least one carrier.

Optionally, the indicator field includes at least one of the following:

a rate matching indicator field;
a zero power channel state information reference signal (ZP CSI-RS) indicator field;
a transmission configuration indication (TCI) indicator field;
a sounding reference signal (SRS) request indicator field; or
an SRS offset indicator field.

Optionally, the N bits in the first indicator field are used to indicate a first index value of a first scheduled carrier, wherein the first indicator field is one of the at least one indicator field, the first scheduled carrier is one of the at least one carrier, N≤M, N and M are positive integers, and M is the number of bits of the indicator field.

Optionally, when the sum of the numbers of bits occupied by the at least one carrier is less than or equal to the number of all bits contained in the indicator field, the bits in the indicator field that are occupied by one carrier of the at least one carrier are different from the bits in the indicator field that are occupied by another carrier of the at least one carrier.

In Fig. 6, the bus architecture can include any number of interconnected buses and bridges, specifically one or more processors represented by processor 63 and various circuits of memory represented by memory 61 are linked together. The bus architecture can also link various other circuits such as peripheral devices, voltage regulators and power management circuits together, which are all well known in the art, so they are not further described in this article. The bus interface provides an interface. The transceiver 62 can be a plurality of components, that is, including a transmitter and a receiver, providing a unit for communicating with various other devices on a transmission medium, and these transmission media include transmission media such as wireless channels, wired channels, and optical cables. The processor 63 is responsible for managing the bus architecture and general processing, and the memory 61 can store data used by the processor 63 when performing operations.

The processor 63 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned device provided by the embodiment of the present disclosure can implement all the method steps implemented by the information processing method embodiment on the above-mentioned network device side, and can achieve the same technical effect. The parts and beneficial effects of this embodiment that are the same as the method embodiment will not be described in detail here.

As shown in Fig. 7, an embodiment of the present disclosure provides a network device 700, including:

a processing unit 710, configured to determine at least one indicator field according to a mapping relationship between bandwidth part (BWP) configurations corresponding to at least one carrier and index values, wherein the indicator field is used to indicate an index value in the mapping relationship;

a first sending unit 720, configured to send downlink control information (DCI) to a terminal; wherein the DCI is used for scheduling the at least one carrier, and the DCI includes the at least one indicator field.

Optionally, the network device further includes:

a second sending unit, configured to send a higher layer signaling to the terminal; wherein the higher layer signaling includes the mapping relationship.

Optionally, the number of bits of the indicator field is determined by the number of index values in the mapping relationship.

Optionally, the number of bits of the indicator field is: $\lceil log_2 L \rceil$ , where L is the number of index values.

Optionally, the mapping relationship includes one of the following:

a first mapping relationship between a first BWP configuration and index values; wherein the at least one carrier corresponds to one first mapping relationship, and the first BWP configuration includes BWP configurations corresponding to all BWPs respectively on each carrier of the at least one carrier; or, the first BWP configuration includes BWP configurations corresponding to all BWPs respectively on each carrier of a carrier set, and the carrier set includes all carriers that the DCI is used for scheduling;

a second mapping relationship between a second BWP configuration and index values; wherein each BWP on each carrier of the at least one carrier corresponds to one second mapping relationship, and the second BWP configuration is a BWP configuration corresponding to one BWP;

a third mapping relationship between a third BWP configuration and index values, wherein each carrier of the at least one carrier corresponds to one third mapping relationship, and the third BWP configuration includes BWP configurations corresponding to all BWPs respectively on one carrier.

Optionally, the number of bits of the indicator field being determined by the number of the index values in the mapping relationship includes:

in a case that the mapping relationship is the first mapping relationship, the number of bits of the indicator field is determined by the number of the index values in the first mapping relationship;

or,

in a case that the mapping relationship is the second mapping relationship or the third mapping relationship, the number of bits of the indicator field is determined by a maximum number of the index values in the second mapping relationship or the third mapping relationship.

Optionally, the number of bits of the indicator field being determined by the maximum number of the index values in the second mapping relationship includes:

the number of bits of the indicator field is determined by the maximum number of the index values in the second mapping relationships corresponding to active BWPs;

or,

the number of bits of the indicator field is determined by the maximum number of the index values in the second mapping relationships corresponding to all BWPs on the at least one carrier.

Optionally, the indicator field includes at least one of the following:

a rate matching indicator field;

a zero power channel state information reference signal (ZP CSI-RS) indicator field;

a transmission configuration indication (TCI) indicator field;

a sounding reference signal (SRS) request indicator field; or

an SRS offset indicator field.

Optionally, the N bits in the first indicator field are used to indicate a first index value of a first scheduled carrier, wherein the first indicator field is one of the at least one indicator field, the first scheduled carrier is one of the at least one carrier, $N \leq M$ and N and M are positive integers, and M is the number of bits of the indicator field.

Optionally, when the sum of the numbers of bits occupied by the at least one carrier is less than or equal to the number of all bits contained in the indicator field, the bits in the indicator field that are occupied by one carrier of the at least one carrier are different from the bits in the indicator field that are occupied by another carrier of the at least one carrier.

It should be noted here that the above-mentioned network device provided in the embodiment of the present disclosure can implement all the method steps implemented by the information processing method embodiment on the above-mentioned network device side, and can achieve the same technical effect. The parts and beneficial effects that are the same as the method embodiment in this embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes various media that can store program codes, such as U disk, mobile hard disk, read-only memory (ROM), random access memory (RAM), magnetic disk or optical disc.

An embodiment of the present disclosure also provides a processor-readable storage medium, wherein the processor-readable storage medium stores a computer program, wherein the computer program is configured to cause the processor to execute the steps of the method for information processing on the terminal side, or the computer program is configured to cause the processor to execute the steps of the method for information processing on the network device side, and the same technical effect can be achieved. The parts and beneficial effects of this embodiment that are the same as those of the method embodiment will not be described in detail herein.

The processor-readable storage medium can be any available medium or data storage device that can be accessed by the processor, including but not limited to magnetic storage (such as floppy disks, hard disks, magnetic tapes, magneto-optical (MO)), optical storage (such as compact discs (CD), digital versatile discs (DVD), Blu-ray Discs (BD), high-definition versatile discs (HVD)), and semiconductor memory (such as ROM, erasable programmable read-only memory (EPROM), electrically erasable programmable read-only memory (EEPROM), non-volatile memory (NAND FLASH), solid-state disk (SSD)), etc.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

In addition, it should be pointed out that in the apparatus and method of the present disclosure, it is obvious that each component or each step can be decomposed and/or recombined. These decompositions and/or recombination should be regarded as equivalent schemes of the present disclosure. Moreover, the steps of performing the above series of processing can naturally be performed in chronological order according to the order of description, but it is not necessary to perform them in chronological order, and some steps can be performed in parallel or independently of each other. For those of ordinary skill in the art, it is understandable that all or any steps or components of the method and apparatus of the present disclosure can be implemented in hardware, firmware, software or a combination thereof in any computing device (including processors, storage media, etc.) or a network of computing devices, which can be achieved by those of ordinary skill in the art using their basic programming skills after reading the description of the present disclosure.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. An information processing method, comprising:

   receiving, by a terminal, downlink control information (DCI) sent by a network device, wherein the DCI is used for scheduling at least one carrier, and the DCI comprises at least one indicator field, and the indicator field is used to indicate an index value;
   determining, by the terminal, according to a mapping relationship between bandwidth part (BWP) configurations corresponding to the at least one carrier and index values, a BWP configuration corresponding to a first index value indicated by a first indicator field, wherein the first indicator field is one of the at least one indicator field; and
   determining, by the terminal, according to the BWP configuration corresponding to the first index value, a parameter of an active BWP on a first scheduled carrier, wherein the first scheduled carrier is at least one of the at least one carrier.

2. The information processing method according to claim 1, further comprising:
   receiving, by the terminal, a higher layer signaling sent by the network device, wherein the higher layer signaling comprises the mapping relationship.

3. The information processing method according to claim 1, wherein a number of bits of the indicator field is determined by a number of the index values in the mapping relationship.

4. The information processing method according to claim 3, wherein the number of bits of the indicator field is: $\lceil log_2 L \rceil$, wherein L is the number of the index values.

5. The information processing method according to any one of claims 1 to 4, wherein the mapping relationship comprises one of the following:

a first mapping relationship between a first BWP configuration and index values, wherein the at least one carrier corresponds to one first mapping relationship, and the first BWP configuration comprises BWP configurations corresponding to all BWPs respectively on each carrier of the at least one carrier; or, the first BWP configuration comprises BWP configurations corresponding to all BWPs respectively on each carrier of a carrier set, and the carrier set comprises all carriers that the DCI is used for scheduling;

a second mapping relationship between a second BWP configuration and index values, wherein each BWP on each carrier of the at least one carrier corresponds to one second mapping relationship, and the second BWP configuration is a BWP configuration corresponding to one BWP;

a third mapping relationship between a third BWP configuration and index values, wherein each carrier of the at least one carrier corresponds to one third mapping relationship, and the third BWP configuration comprises BWP configurations corresponding to all BWPs respectively on one carrier.

6. The information processing method according to claim 5, wherein the number of bits of the indicator field being determined by the number of the index values in the mapping relationship comprises:

in a case that the mapping relationship is the first mapping relationship, the number of bits of the indicator field is determined by the number of the index values in the first mapping relationship;
or,
in a case that the mapping relationship is the second mapping relationship or the third mapping relationship, the number of bits of the indicator field is determined by a maximum number of the index values in the second mapping relationship or the third mapping relationship.

7. The information processing method according to claim 6, wherein the number of bits of the indicator field being determined by the maximum number of the index values in the second mapping relationship comprises:

the number of bits of the indicator field is determined by the maximum number of the index values in the second mapping relationships corresponding to active BWPs;
or,
the number of bits of the indicator field is determined by the maximum number of the index values in the second mapping relationships corresponding to all BWPs on the at least one carrier.

8. The information processing method according to claim 1, wherein the indicator field comprises at least one of the following:

a rate matching indicator field;
a zero power channel state information reference signal (ZP CSI-RS) indicator field;
a transmission configuration indication (TCI) indicator field;
a sounding reference signal (SRS) request indicator field; or
an SRS offset indicator field.

9. The information processing method according to claim 1, wherein after the receiving, by the terminal, the DCI sent by the network device, the method further comprises:
determining, by the terminal, the first index value corresponding to the first scheduled carrier according to a numerical value indicated by N bits in the indicator field, wherein $N \leq M$, and N and M are positive integers, and M is the number of bits of the indicator field.

10. The information processing method according to claim 9, wherein the determining, by the terminal, the first index value corresponding to the first scheduled carrier according to the numerical value indicated by N bits in the indicator field comprises:

in a case that the numerical value indicated by the N bits does not fall within an index value range corresponding to the first scheduled carrier, ignoring, by the terminal, the indicator field, or, determining, by the terminal, the first index value according to the numerical value indicated by the N bits;
or,
in a case that the numerical value indicated by the N bits falls within the index value range corresponding to the first scheduled carrier, determining the numerical value indicated by the N bits as the first index value.

**11.** An information processing method, comprising:

determining, by a network device, at least one indicator field according to a mapping relationship between bandwidth part (BWP) configurations corresponding to at least one carrier and index values, wherein the indicator field is used to indicate an index value in the mapping relationship; and

sending, by the network device, downlink control information (DCI) to a terminal, wherein the DCI is used for scheduling the at least one carrier, and the DCI comprises the at least one indicator field.

**12.** The information processing method according to claim 11, further comprising:

sending, by the network device, a higher layer signaling to the terminal, wherein the higher layer signaling comprises the mapping relationship.

**13.** An information processing apparatus, comprising a memory, a transceiver, and a processor;

wherein the memory is configured to store a computer program, the transceiver is configured to send and receive data under the control of the processor, the processor is configured to read the computer program in the memory and perform the following steps:

receiving downlink control information (DCI) sent by a network device, wherein the DCI is used for scheduling at least one carrier, and the DCI comprises at least one indicator field, and the indicator field is used to indicate an index value;

determining, according to a mapping relationship between bandwidth part (BWP) configurations corresponding to the at least one carrier and index values, a BWP configuration corresponding to a first index value indicated by a first indicator field, wherein the first indicator field is one of the at least one indicator field; and

determining, according to the BWP configuration corresponding to the first index value, a parameter of an active BWP on a first scheduled carrier, wherein the first scheduled carrier is at least one of the at least one carrier.

**14.** The information processing apparatus according to claim 13, wherein the processor is configured to read the computer program in the memory and perform the following step:

receiving a higher layer signaling sent by the network device, wherein the higher layer signaling comprises the mapping relationship.

**15.** The information processing apparatus according to claim 13, wherein a number of bits of the indicator field is determined by a number of the index values in the mapping relationship.

**16.** The information processing apparatus according to claim 15, wherein the number of bits of the indicator field is: $\lceil log_2 L \rceil$, wherein L is the number of the index values.

**17.** The information processing apparatus according to any one of claims 13 to 16, wherein the mapping relationship comprises one of the following:

a first mapping relationship between a first BWP configuration and index values, wherein the at least one carrier corresponds to one first mapping relationship, and the first BWP configuration comprises BWP configurations corresponding to all BWPs respectively on each carrier of the at least one carrier, or, the first BWP configuration comprises BWP configurations corresponding to all BWPs respectively on each carrier of a carrier set, and the carrier set comprises all carriers that the DCI is used for scheduling;

a second mapping relationship between a second BWP configuration and index values, wherein each BWP on each carrier of the at least one carrier corresponds to one second mapping relationship, and the second BWP configuration is a BWP configuration corresponding to one BWP;

a third mapping relationship between a third BWP configuration and index values, wherein each carrier of the at least one carrier corresponds to one third mapping relationship, and the third BWP configuration comprises BWP configurations corresponding to all BWPs respectively on one carrier.

**18.** The information processing apparatus according to claim 17, wherein the number of bits of the indicator field being determined by the number of the index values in the mapping relationship comprises:

in a case that the mapping relationship is the first mapping relationship, the number of bits of the indicator field is determined by the number of the index values in the first mapping relationship;

or,

in a case that the mapping relationship is the second mapping relationship or the third mapping relationship, the number of bits of the indicator field is determined by a maximum number of the index values in the second mapping relationship or the third mapping relationship.

19. The information processing apparatus according to claim 18, wherein the number of bits of the indicator field being determined by the maximum number of the index values in the second mapping relationship comprises:

the number of bits of the indicator field is determined by the maximum number of the index values in the second mapping relationships corresponding to active BWPs;
or,
the number of bits of the indicator field is determined by the maximum number of the index values in the second mapping relationships corresponding to all BWPs on the at least one carrier.

20. The information processing apparatus according to claim 13, wherein the indicator field comprises at least one of the following:

a rate matching indicator field;
a zero power channel state information reference signal (ZP CSI-RS) indicator field;
a transmission configuration indication (TCI) indicator field;
a sounding reference signal (SRS) request indicator field; or
an SRS offset indicator field.

21. The information processing apparatus according to claim 13, wherein the processor is configured to read the computer program in the memory and perform the following step:
determining the first index value corresponding to the first scheduled carrier according to a numerical value indicated by N bits in the indicator field, wherein $N \leq M$, N and M are positive integers, and M is the number of bits of the indicator field.

22. The information processing apparatus according to claim 21, wherein the processor is configured to read the computer program in the memory and perform the following steps:

in a case that the numerical value indicated by the N bits does not fall within an index value range corresponding to the first scheduled carrier, ignoring the indicator field, or determining the first index value according to the numerical value indicated by the N bits;
or,
in a case that the numerical value indicated by the N bits falls within the index value range corresponding to the first scheduled carrier, determining the numerical value indicated by the N bits as the first index value.

23. A terminal, comprising:

a first receiving unit, configured to receive downlink control information (DCI) sent by a network device, wherein the DCI is used for scheduling at least one carrier, and the DCI comprises at least one indicator field, and the indicator field is used to indicate an index value;
a first processing unit, configured to determine, according to a mapping relationship between bandwidth part (BWP) configurations corresponding to the at least one carrier and index values, a BWP configuration corresponding to a first index value indicated by a first indicator field, wherein the first indicator field is one of the at least one indicator field; and
a second processing unit, configured to determine, according to the BWP configuration corresponding to the first index value, a parameter of an active BWP on a first scheduled carrier, wherein the first scheduled carrier is at least one of the at least one carrier.

24. The terminal according to claim 23, further comprising:
a second receiving unit, configured to receive a higher layer signaling sent by the network device, wherein the higher layer signaling comprises the mapping relationship.

25. The terminal according to claim 23, wherein a number of bits of the indicator field is determined by a number of the index values in the mapping relationship.

26. The terminal according to claim 25, wherein the number of bits of the indicator field is: $\lceil \log_2 L \rceil$, wherein L is the number of the index values.

27. The terminal according to any one of claims 23 to 26, wherein the mapping relationship comprises one of the following:

a first mapping relationship between a first BWP configuration and index values, wherein the at least one carrier corresponds to one first mapping relationship, and the first BWP configuration comprises BWP configurations corresponding to all BWPs respectively on each carrier of the at least one carrier, or, the first BWP configuration comprises BWP configurations corresponding to all BWPs respectively on each carrier of a carrier set, and the carrier set comprises all carriers that the DCI is used for scheduling;
a second mapping relationship between a second BWP configuration and index values, wherein each BWP on each carrier of the at least one carrier corresponds to one second mapping relationship, and the second BWP configuration is a BWP configuration corresponding to one BWP;
a third mapping relationship between a third BWP configuration and index values, wherein each carrier of the at least one carrier corresponds to one third mapping relationship, and the third BWP configuration comprises BWP configurations corresponding to all BWPs respectively on one carrier.

28. The terminal according to claim 27, wherein the number of bits of the indicator field being determined by the number of the index values in the mapping relationship comprises:

in a case that the mapping relationship is the first mapping relationship, the number of bits of the indicator field is determined by the number of the index values in the first mapping relationship;
or,
in a case that the mapping relationship is the second mapping relationship or the third mapping relationship, the number of bits of the indicator field is determined by a maximum number of the index values in the second mapping relationship or the third mapping relationship.

29. The terminal according to claim 28, wherein the number of bits of the indicator field being determined by the maximum number of the index values in the second mapping relationship comprises:

the number of bits of the indicator field is determined by the maximum number of the index values in the second mapping relationships corresponding to active BWPs;
or,
the number of bits of the indicator field is determined by the maximum number of the index values in the second mapping relationships corresponding to all BWPs on the at least one carrier.

30. The terminal according to claim 23, wherein the indicator field comprises at least one of the following:

a rate matching indicator field;
a zero power channel state information reference signal (ZP CSI-RS) indicator field;
a transmission configuration indication (TCI) indicator field;
a sounding reference signal (SRS) request indicator field; or
an SRS offset indicator field.

31. The terminal according to claim 23, further comprising:
a third processing unit, configured to determine the first index value corresponding to the first scheduled carrier according to a numerical value indicated by the N bits in the indicator field, wherein N≤M, N and M are positive integers, and M is the number of bits of the indicator field.

32. The terminal according to claim 31, wherein the third processing unit is further configured to:

in a case that the numerical value indicated by the N bits does not fall within an index value range corresponding to the first scheduled carrier, ignore the indicator field, or determine the first index value according to the numerical value indicated by the N bits;
or,
in a case that the numerical value indicated by the N bits falls within the index value range corresponding to the first scheduled carrier, determine the numerical value indicated by the N bits as the first index value.

33. An information processing apparatus, comprising a memory, a transceiver, and a processor;
wherein the memory is configured to store a computer program, the transceiver is configured to send and receive data under the control of the processor, the processor is configured to read the computer program in the memory and perform the following steps:

determining at least one indicator field according to a mapping relationship between bandwidth part (BWP) configurations corresponding to at least one carrier and index values, wherein the indicator field is used to indicate an index value in the mapping relationship; and
sending downlink control information (DCI) to a terminal, wherein the DCI is used for scheduling the at least one carrier, and the DCI comprises the at least one indicator field.

34. The information processing apparatus according to claim 33, wherein the processor is configured to read the computer program in the memory and perform the following step:
sending a higher layer signaling to the terminal, wherein the higher layer signaling comprises the mapping relationship.

35. A network device, comprising:

a processing unit, configured to determine at least one indicator field according to a mapping relationship between bandwidth part (BWP) configurations corresponding to at least one carrier and index values, wherein the indicator field is used to indicate an index value in the mapping relationship;
a first sending unit, configured to send downlink control information (DCI) to a terminal, wherein the DCI is used for scheduling the at least one carrier, and the DCI comprises the at least one indicator field.

36. The network device according to claim 35, further comprising:
a second sending unit, configured to send a higher layer signaling to the terminal, wherein the higher layer signaling comprises the mapping relationship.

37. A processor-readable storage medium storing a computer program, wherein the computer program, when being executed by a processor, causes the processor to execute the steps of the information processing method according to any one of claims 1 to 10, or the computer program, when being executed by the processor, causes the processor to execute the steps of the information processing method according to claim 11 or 12.

Fig. 1

A terminal receives DCI sent by a network device, wherein the DCI is used for scheduling at least one carrier, and the DCI includes at least one indicator field, and the indicator field is used to indicate an index value

21

The terminal determines a BWP configuration corresponding to a first index value indicated by a first indicator field according to a mapping relationship between BWP configurations corresponding to the at least one carrier and index values, wherein the first indicator field is one of the at least one indicator field

22

The terminal determines, according to the BWP configuration corresponding to the first index value, a parameter of an active BWP on a first scheduled carrier, wherein the first scheduled carrier is at least one of the at least one carrier

23

Fig. 2

A network device determines at least one indicator field according to a mapping relationship between BWP configurations corresponding to the at least one carrier and index values; wherein the indicator field is used to indicate an index value in the mapping relationship

31

The network device sends a DCI to a terminal; wherein the DCI is used for scheduling the at least one carrier, and the DCI includes the at least one indicator field

32

Fig. 3

43

Processor

41

Memory

Bus interface

42

Transceiver

44

User interface

Fig. 4

First receiving unit **510**

First processing unit **520**

Second processing unit **530**

**500**

Fig. 5

Processor **63**

Memory **61**

Bus interface

Transceiver **62**

Fig. 6

Processing unit **710**

First sending unit **720**

**700**

Fig. 7

## INTERNATIONAL SEARCH REPORT

| International application No. |
| --- |
| **PCT/CN2024/075735** |

**A. CLASSIFICATION OF SUBJECT MATTER**

H04W72/0453(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CNKI, VCN, DWPI, ENTXT, 3GPP, IEEE: 下行控制信息, 调度, 载波, 多个, 指示域, 索引值, 宽带部分, 配置, 映射, 关联, 对应, 激活, 参数, 资源, 个数, 长度, DCI, schedul+, carrier, multiple, indication field, index, BWP, configuration, map+, corresponding, active, resource

**C. DOCUMENTS CONSIDERED TO BE RELEVANT**

| Category* | Citation of document, with indication, where appropriate, of the relevant passages | Relevant to claim No. |
| --- | --- | --- |
| X | CN 113630873 A (VIVO COMMUNICATION TECHNOLOGY CO., LTD.) 09 November 2021 (2021-11-09) <br> description, paragraphs 0059-0115, 0125-0147 and 0207-0215 | 1-4, 8-16, 20-26, 30-37 |
| A | CN 115004836 A (BEIJING XIAOMI MOBILE SOFTWARE CO., LTD.) 02 September 2022 (2022-09-02) <br> entire document | 1-37 |
| A | US 2022353851 A1 (BEIJING UNISOC COMMUNICATION TECHNOLOGY CO., LTD.) 03 November 2022 (2022-11-03) <br> entire document | 1-37 |
| A | US 2021153209 A1 (HUAWEI TECHNOLOGIES CO., LTD.) 20 May 2021 (2021-05-20) <br> entire document | 1-37 |
| A | CN 113595696 A (HUAWEI TECHNOLOGIES CO., LTD.) 02 November 2021 (2021-11-02) <br> entire document | 1-37 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 April 2024** | **24 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075735**

| Patent document cited in search report | | | Publication date (day/month/year) | Patent family member(s) | | | Publication date (day/month/year) |
|---|---|---|---|---|---|---|---|
| CN | 113630873 | A | 09 November 2021 | WO | 2021223704 | A1 | 11 November 2021 |
| | | | | EP | 4135453 | A1 | 15 February 2023 |
| | | | | US | 2023066709 | A1 | 02 March 2023 |
| | | | | JP | 2023524310 | W | 09 June 2023 |
| CN | 115004836 | A | 02 September 2022 | WO | 2023206563 | A1 | 02 November 2023 |
| US | 2022353851 | A1 | 03 November 2022 | JP | 2023552503 | A | 18 December 2023 |
| | | | | WO | 2021139825 | A1 | 15 July 2021 |
| | | | | EP | 4089948 | A1 | 16 November 2022 |
| | | | | CN | 111245586 | A | 05 June 2020 |
| US | 2021153209 | A1 | 20 May 2021 | WO | 2020029725 | A1 | 13 February 2020 |
| | | | | JP | 2021532628 | A | 25 November 2021 |
| | | | | EP | 3809779 | A1 | 21 April 2021 |
| | | | | CN | 110809321 | A | 18 February 2020 |
| | | | | IN | 202027057461 | A | 09 April 2021 |
| | | | | VN | 77507 | A | 26 April 2021 |
| | | | | BR | 112021002159 | A2 | 04 May 2021 |
| | | | | CN | 114980326 | A | 30 August 2022 |
| CN | 113595696 | A | 02 November 2021 | WO | 2021218559 | A1 | 04 November 2021 |
| | | | | EP | 4135452 | A1 | 15 February 2023 |
| | | | | US | 2023053143 | A1 | 16 February 2023 |
| | | | | CN | 116156646 | A | 23 May 2023 |

Form PCT/ISA/210 (patent family annex) (July 2022)

**EP 4 668 952 A1**

**Patent documents cited in the description**

- CN 202310133069